(19) Europäisches Patentamt
European Patent Office
Office européen des brevets

(11) **EP 3 955 160 B1**

(12) **EUROPEAN PATENT SPECIFICATION**

(45) Date of publication and mention
of the grant of the patent:
**10.09.2025   Bulletin 2025/37**

(51) International Patent Classification (IPC):
***G06V 10/141*** (2022.01)       ***G06V 20/80*** (2022.01)
***G06V 10/764*** (2022.01)

(21) Application number: **21187102.5**

(52) Cooperative Patent Classification (CPC):
**G06V 10/141; G06V 10/764; G06V 20/80**

(22) Date of filing: **22.07.2021**

(54) **TARGET IDENTIFICATION METHOD AND DEVICE**

VERFAHREN UND VORRICHTUNG ZUR OBJEKTIDENTIFIZIERUNG

PROCÉDÉ ET DISPOSITIF D'IDENTIFICATION DE CIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.08.2020   CN 202010794913**

(43) Date of publication of application:
**16.02.2022   Bulletin 2022/07**

(73) Proprietor: **Robert Bosch GmbH**
**70442 Stuttgart (DE)**

(72) Inventors:
• **XIE, Robert**
  **Shanghai 200335 (CN)**
• **GAO, Yu**
  **Shanghai 200335 (CN)**

(56) References cited:
CA-A1- 3 035 618        CN-A- 108 780 506
EA-B1- 031 721          US-A1- 2019 286 902
US-B2- 8 923 550

## Description

## Technical Field

The present invention relates to target object identification, and in particular to target identification implemented based on a surface texture of a target.

## Background Art

Currently, the image recognition techniques are commonly used to recognize different objects or targets, for example, human faces. Because there are significant differences in the faces of different people, for example, from a planar and stereoscopic profile perspective, macroscopic or stereoscopic imaging and analysis techniques may be employed to implement facial recognition. In some applications, however, the objects needing to be distinguished look alike, for example, batches of products of the same model, such as computer keyboards. Since the macroscopic features of the objects are substantially the same, identification and verification of each object are achieved by employing analysis of the microscopic features of the object, such as texture features. However, due to the variation of ambient light and other factors, the extracted texture features are very random, which brings troubles for target identification. Document US2019/286902 discloses optical techniques used to authenticate a pre-characterized object according to its latent structural characteristics. For example, an image stack can be generated by aligning enrollment images acquired from an enrollment object according to different optical geometries. Enrollment basis functions can be computed from the stack that describe latent structural characteristics of the enrollment object, and enrollment magnitudes can be extracted from those basis functions. Subsequently, another image stack can be generated by aligning authentication images acquired from an authentication object according to different optical geometries. Authentication basis functions can be computed from the stack to describe latent structural characteristics of the authentication object, and authentication magnitudes can be extracted from those basis functions. A mathematical correspondence can be computed between the enrollment and authentication magnitudes, from which a determination can be made as to whether the authentication object is the enrollment object.

## Summary of the Invention

The present invention provides an improved target identification technology, which uses a light source with fixed irradiation intensity to irradiate a surface of a target so as to guarantee ambient light stability, and simultaneously ensures that the irradiation light source and an image sensor are always relatively fixed, such that images obtained at a plurality of photographing angles truly reflect light scattering features on a surface texture of the target, thereby truly reflecting the features of the surface texture. Therefore, the target identification and verification are implemented based on the texture features.

According to one aspect of the present invention, there is provided a target identification method, comprising: irradiating a target (300) to be identified by using a light source (200) with constant light intensity and simultaneously capturing images of the target (300) by using a camera (100) to generate a plurality of image frames (PN) at different photographing angles (0i), wherein an angle difference ($\Delta\Theta i$) between photographing angles ($0i, \Theta i-1$) of two consecutive image frames (Pi, Pi-1) is less than a predetermined value ($\Theta T$), and the light source (200) and the camera (100) maintain a fixed relative position relation at the different photographing angles ($\Theta i$); registering the plurality of image frames (Pi) through homography transformation, wherein the registering the plurality of image frames (PN) comprises: registering a current frame (Pi) of image in the plurality of image frames (PN) to an adjacent previous frame (Pi-1) of image that serves as a reference image; or taking one frame of image in the plurality of image frames (PN) as a reference image and registering the remaining image frames in the plurality of image frames (PN) to the reference image, and calculating a differential angle image ($\Delta Pi$) of a current frame (Pi) of image relative to the reference image after registration, wherein the differential angle image ($\Delta Pi$) is a difference between the registered image frame (Pi') and the reference image and represents a scattering difference of irradiation light on a surface texture of the target (300) to be identified at different photographing angles (8i); and processing a plurality of differential angle images ($\Delta Pi$) generated based on the plurality of image frames (PN) to generate a unique identification code (SN) indicating the target (300) to be identified, wherein processing the plurality of differential angle images ($\Delta Pi$) to generate an identification code (SN) indicating the target (300) to be identified comprises: summing the plurality of differential angle images ($\Delta Pi$) to generate a total differential angle image (SDAI) representing the target (300) to be identified at different photographing angles (8i); and processing the total differential angle image (SDAI) by using a trained target identification model to output the identification code (SN), wherein the trained target identification model is obtained through training by using a sample collected from a target to be identified, in maintaining said fixed relative position relation of the light source (200) and the camera (100) at different photographing angles.

According to another aspect of the present invention, there is provided an electronic device, having an image sensor and a light source for providing auxiliary light for photographing integrated thereon, the electronic device further comprising a target identification module for executing the method according to the present invention.

**Brief Description of the Drawings**

Fig. 1 schematically shows a target imaging and photographing process;
Fig. 2 shows a flow chart of a target identification method according to an example of the present invention;
Fig. 3 schematically shows a schematic diagram for generating a differential angle image; and
Fig. 4 schematically shows a sample generation process during model training.

**Detailed Description of Embodiments**

The technical solution of the embodiments of the present invention will be clearly and completely described below in conjunction with the accompanying drawings in the embodiments of the present invention, and clearly, the described embodiments are for the purpose of illustrating the present invention only and are not intended to be limiting.

In reading texture features of a surface of a target, it is usually necessary to irradiate the surface of the target to be identified by using a light source, and at the same time, use an image sensor for photographing. In order to accurately read these texture features, in accordance with the embodiments of the present invention, the light source and the image sensor are required to maintain a fixed relative position relation, for example, both fixed in an electronic device, for example, a flashlight and an image sensor in a mobile phone are used, wherein the flashlight is kept on throughout the capturing of an image of the target, thereby ensuring that each obtained image is under an identical lighting condition.

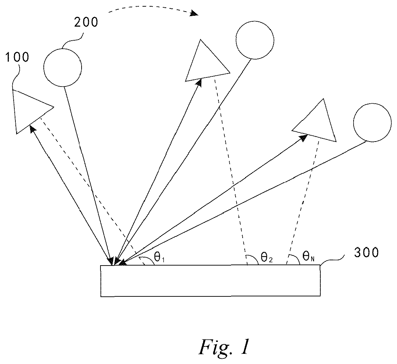

Fig. 1 schematically shows a schematic diagram of photographing a surface of a target 300 by using a flashlight and an image sensor located in a mobile phone. In the figure, a triangle symbol 100 denotes the image sensor, and a circle symbol 200 denotes the flashlight. The flashlight 200 and the sensor 100 have fixed positions and orientations due to being fixed inside the frame of the mobile phone, for example, as shown in Fig. 1, in a particular electronic device, incident light emitted from the flashlight 200 to the surface of the target 300 maintains a fixed angle relative to reflected light reflected from the surface of the target to the image sensor 100. However, the angle between the incident light and the reflected light may vary depending on different electronic devices. Due to the use of the light source and the image sensor with the fixed relative position relation, the following situation may be avoided: the difference in the changed positions, for example, angles, etc., between the image sensor and the light source affects the scattering feature exhibition of the texture, and then accurate reflection on the texture features of the surface may be interfered with.

According to an embodiment of the present invention, a series of image frames of the target 300 at different photographing angles are obtained by moving the mobile phone in a certain rotation direction (for example, the clockwise direction as shown in the figure). In the moving process, the flashlight of the mobile phone is kept on throughout to obtain N frames of images. Herein, N is greater than a predetermined value, for example, 50. It should be noted that in the photographing process, a photographing angle difference between any two adjacent frames of images of the obtained N frames of images is less than a predetermined threshold $\theta_T$, the threshold $\theta_T$ generally depends on a focal length of the image sensor and a distance between the image sensor and the flashlight, and the threshold $\theta_T$ may be set to, for example, 5 degrees on the basis of statistics of commercially available mobile phones. However, the present invention is not limited thereto, and the threshold $\theta_T$ may be set according to other practical requirements. As shown in Fig. 1, the photographing angle is represented by an included angle $\theta$ between a normal line of a lens surface of the image sensor and the surface of the target, wherein when the mobile phone is in a first position, the photographing angle is $\theta_1$, and a first image frame $P_1$ is obtained; and when the mobile phone is in an adjacent second position, the photographing angle is $\theta_2$, and a second image frame $P_2$ is obtained, such that a photographing angle difference between the two image frames $P_2$ and $P_1$ is $\theta_2 - \theta_1$, which needs to be less than or equal to $\theta_T$, and N frames of images are obtained by continuously changing the photographing angle in the same direction in this way. According to this embodiment of the present invention, the N frames of images can be conveniently obtained by moving the mobile phone instead of moving the target. By processing the N frames of images obtained in the manner described above, a feature quantity is generated to uniquely indicate the texture feature of the target, for example, a feature code SN is generated. It should be noted herein that the generated N frames of images may be brightness or intensity images or grayscale images.

According to one example, the photographing angles $\theta_1$, $\theta_2$, ..., $\theta_N$ of the N frames of images may be directly measured by using an angle sensor, etc. built in the mobile phone. For example, a continuous photographing function of the mobile phone may be utilized, and in the process of continuously photographing the surface of the target by the mobile phone, angle change information of three axes in the angle sensor may be simultaneously read while the image sensor performs photographing, such that a plurality of image frames and an angle $\theta$ of each frame may be obtained. Thus, the threshold $\theta_T$ may be used to filter out images with angle differences between adjacent images greater than the threshold from these images so as to extract the image frames satisfying a threshold requirement. Further, it should be noted herein that the N frames of images used for subsequent processing may be either from the same continuous photographing operation or from different continuous photographing operations, as long as it is ensured that the plurality of image frames obtained in each continuous photographing operation satisfy the above threshold requirement.

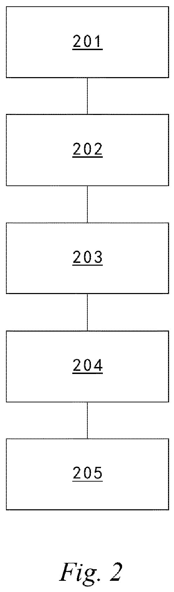

A flow of the target identification method according to the present invention will be described below in conjunction with Fig. 2. In this example, keyboard identification is used as an example to illustrate the flow of the method according to the present invention.

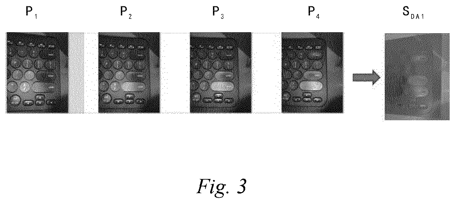

In step 201, a keyboard is held stationary on an operation platform, the flashlight of the mobile phone is turned on, a first frame of image $P_1$ of the keyboard is taken in a first position L1, then the mobile phone is moved to a second position L2 in a clockwise direction, and a second frame of image $P_2$ is taken, such that a total of N frames of images, that is, $\{(P_1, \theta_1), (P_2, \theta_2), ..., (P_i, \theta_i), ..., (P_N, \theta_N)\}$ are obtained by continuously changing photographing angles in the direction, where $P_i$ represents an $i^{th}$ frame of image obtained at the photographing angle $\theta_i$, and $1 < i \leq N$. When the mobile phone is moved to change the photographing angle, a photographing angle difference between any two adjacent image frames $\theta_{i+1} - \theta_i$ is less than or equal to $\theta_T$. As shown in Fig. 3, it is assumed that a total of four keyboard images ($P_1$, $P_2$, $P_3$, and $P_4$) are taken.

In step 202, a differential angle image (DAI) between every two adjacent images in the N frames of images is calculated. To this end, according to an example of the present invention, any one of the N frames of images, for example, $P_1$, is designated as a reference image, and the remaining N-1 frames of images are geometrically registered to the image $P_1$. To implement image registration, a feature point-based visual feature extraction algorithm commonly used in the prior art, for example, an oriented FAST and rotated BRIEF (ORB) algorithm, a scale-invariant feature transform (SIFT) algorithm, etc., may be employed herein. For example, for the SIFT algorithm, the identical feature points on two images to be registered are determined by detecting and describing local features, for example, corner points, bright points in dark regions, etc., in the images. As an example, the feature points may be extracted around a shift key on the keyboard, comprising position coordinates [x, y] and description vectors of the feature points, and the feature points matching each other on different images are determined by matching description vectors of feature points in different positions, wherein the matching of the description vectors may be represented by calculating a relative distance between the description vectors of different feature points. It is assumed that a feature point [x, y] on the image $P_1$ and a feature point [x', y'] on the image $P_2$ match, then

$$\begin{bmatrix} x' \\ y' \\ 1 \end{bmatrix} = \begin{bmatrix} h_{11} & h_{12} & h_{13} \\ h_{21} & h_{22} & h_{23} \\ 0 & 0 & 1 \end{bmatrix} \begin{bmatrix} x \\ y \\ 1 \end{bmatrix}$$

Herein, $H = \begin{bmatrix} h_{11} & h_{12} & h_{13} \\ h_{21} & h_{22} & h_{23} \\ 0 & 0 & 1 \end{bmatrix}$ is a homography transformation matrix. Thus, each coefficient h in the homography matrix H may be solved by finding a plurality of pairs of [x', y'] and [x, y].

Based on the established homography transformation matrix H, the entire $P_2$ is registered to $P_1$, thereby forming a first transformed image frame $P_2'$. Similarly, a homography transformation matrix between $P_1$ and $P_3$ is established, and the entire $P_3$ is registered to $P_1$, thereby forming a second transformed image frame $P_3'$. In this way, transformed image frames ($P_1'$, $P_2'$, $P_3'$, ..., $P_i'$, ..., $P_N'$) of the first to N$^{th}$ frames of images ($P_1$, $P_2$, $P_3$, ..., $P_i$, ..., $P_N$) may be obtained, wherein the first image frame $P_1$ remains unchanged before and after transformation, that is, $P_1' = P_1$. An image angle difference between each of the N transformed image frames and the first image frame $P_1$ may be according to the following formula: $\Delta P_i = P_i' = P_1$, where $1 \leq i \leq N$, thereby obtaining N differential angle images $\Delta P_1$ to $\Delta P_N$, where $\Delta P_1 = 0$. As previously mentioned, $\Delta P$ represents an intensity difference between the two image frames $P_{i+1}$ and $P_i$ under the condition that the image P is represented in intensity, while $\Delta P$ represents a grayscale difference between the two image frames $P_{i+1}$ and $P_i$ under the condition that the image P is represented in grayscale.

In step 203, a photographing angle difference between each pair of adjacent image frames ($P_{i-1}$, $P_i$) is calculated as $\Delta\theta_i = \theta_i - \theta_{i-1}$, and accordingly, a weight $\gamma_i$ is assigned to the image angle difference $\Delta P_i$ based on the photographing angle difference $\Delta\theta_i$. As an example, roughness of the surface of the target is taken into account while assigning the weight. For example, when the roughness of the surface is low, a difference can be observed with a larger angle change, and under the condition that the roughness is high, a smaller angle change can better describe the change. Therefore, the weight of each photographing angle difference may be set based on different situations.

In step 204, the plurality of differential angle images $\Delta P$ are multiplied by the respective assigned weights to calculate the total differential angle image $S_{DAI}$, that is, $S_{DAI} = \sum_{i=1}^{N} (\gamma i \bullet \Delta Pi)$.

In step 205, the total differential angle image $S_{DAI}$ obtained in step 204 is processed by using a target identification model TIM to generate a classification indication output for the image, while the output value is defined as an identification code or identifier SN of the current keyboard to be identified. In an example of the present invention, the target identification model TIM may be a neural network model that implements binary classification, for example, an activation function sigmoid or tanh is used to output a classification probability value, and the probability value may be used as an identification code SN.

In the present invention, the target identification model TIM may be a neural network model which is used for image classification and is obtained through training by using a sample collected from a target to be identified, for example, a keyboard, and may also be implemented by means of other algorithms obtained based on big data processing and machine learning.

In another embodiment, during the calculation of a differential angle image (DAI) between two of the N frames of images, the differential angle image (DAI) between each pair of frames may also be calculated in the manner that the previous frame of image adjacent to the current frame of image serves as a reference image and the current frame of image is registered to the previous frame of image. For example, the image $P_2$ is registered to $P_1$ to form a registered image $P_2'$, and a differential angle image between the images $P_2$ and $P_1$ is calculated as $\Delta P_2 = P_2' - P_1$. Similarly, the image $P_{i+1}$ is registered to $P_i$ to form a registered image $P_{i+1}'$, and a differential angle image between the images $P_{i+1}'$ and $P_i$ is calculated as $\Delta P_{i+1} = P_{i+1}' = P_i$. Thus, N differential angle images $\Delta P_1$ to $\Delta P_N$ may also be generated, where $\Delta P_1 = 0$.

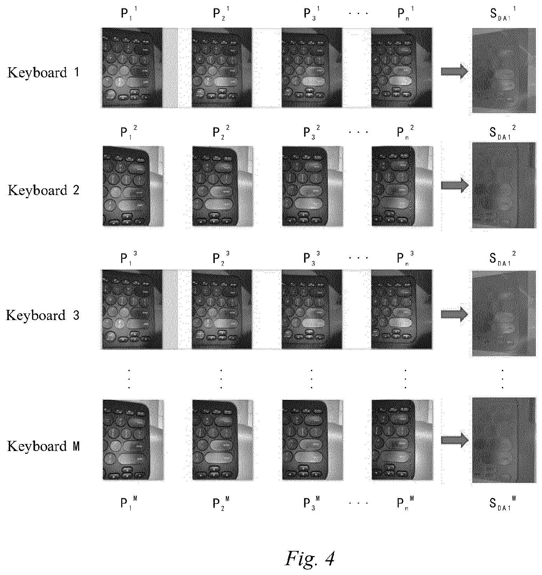

Fig. 4 shows a schematic diagram of training a neural network model by using samples collected from a target to be identified according to an example of the present invention. In this example, a keyboard is still used as an example to illustrate a model training process. Firstly, as shown in Fig. 2, in step 201, M keyboards are selected as sample sources, and N frames of images of each of the M keyboards are taken. Specifically, each keyboard is held stationary on the operation platform, the flashlight of the mobile phone is turned on, a first frame of image $P^1_1$ of the first keyboard is taken in the first position, then the mobile phone is moved to the second position in the clockwise direction, and a second frame of image $P^1_2$ is taken, such that a total of N frames of images $(P^1_1, P^1_2, ..., P^1_i, ..., P^1_N)$ are obtained by continuously changing the photographing angles in the direction, where $P^1_i$ represents an $i^{th}$ frame of image taken from the first keyboard, and similarly, a photographing angle difference $\Delta\theta$ between any two adjacent image frames is less than or equal to $\theta_T$. In this way, N frames of images $(P^2_1, P^2_2, ..., P^2_i, ..., P^2_N)$ of the second keyboard are obtained. It should be noted that when an image frame of the second keyboard is taken, a direction of moving the mobile phone may be different from the direction of moving the mobile phone when the first keyboard is photographed, for example, an anticlockwise direction is used; and it is also possible that the directions are identical, and the clockwise direction is still used. Meanwhile, the photographing angle of each image frame of the second keyboard does not need to be identical to that of the first keyboard, as long as the adjacent angle difference $\Delta\theta$ is less than or equal to $\theta_T$. In this way, an image array of the M keyboards is obtained, which is shown below:

$$P^1_1, P^1_i, ..., P^1_N$$
$$P^2_1, P^2_2, ..., P^2_i, ..., P^2_N$$
$$... ...$$
$$P^M_1, P^M_2, ..., P^M_i, ..., P^M_N$$

Then, based on steps 202 to 204, the total differential angle images $S^1_{DAI}, S^2_{DAI}, ..., S^M_{DAI}$ are determined for the M keyboards. The total differential angle images $S^1_{DAI}, S^2_{DAI}, ..., S^M_{DAI}$ are used as training samples for training a neural network model to generate a keyboard classification model. In the examples of the present invention, a neural network used for learning texture features of the keyboard may be any neural network engine implementation known in the art. For example, a convolutional neural network (CNN) or a recurrent neural network (RNN) may be used to learn these texture features and implement classification by means of activation functions. How to design the structures of the neural networks CNN and RNN and each unit in each RNN may be determined by those skilled in the art depending on actual situations. For example, in a more preferred embodiment, the RNN employs a bidirectional recurrent neural network (BRNN), and each node may be implemented by using a different unit, for example, a long short-term memory (LSTM) neural network or a gated recurrent (GRU) neural network. It should be noted herein that the target identification model TIM is not limited to a neural network model, but may be any big data machine learning model expressed by other algorithms or mathematical representations, as long as such algorithms or mathematical representations are capable of learning texture scattering features. Therefore, after the target identification model TIM is trained, an architecture and parameters of the model are stored for the identification of the keyboard to be identified as described above.

The target identification method according to the present invention may be implemented by using any electronic device integrating a light source and an image sensor. In addition to a mobile phone, such an electronic device includes a tablet computer, etc., and the light source therein may always maintain an on state in a photographing process so as to provide constant light for photographing of each frame of image. Further, in addition to integrating the light source and the image sensor in the electronic device, a target identification module in the form of a software module, for example, may be installed to implement the target identification method described in the present invention.

The present invention has been shown and described in detail above by means of the accompanying drawings and preferred embodiments, however, the present invention is not limited to these disclosed embodiments, and any modifications, including combinations, substitutions, additions, deletions, etc. of features, may be made by those skilled in the art on the basis of the above detailed disclosure. For example, in the method example shown in Fig. 2, not all steps are necessary, and modifications may be made on this basis by those skilled in the art. For example, the step of assigning a weight to the image angle difference $\Delta P$ between image frames on the basis of the photographing angle difference $\Delta\theta_i$ in step 203 may be omitted in another embodiment, such that such a solution is also considered part of the present disclosure, and the scope of protection of the present invention is therefore defined by the appended claims.

## Claims

1. Target identification method, comprising:

   irradiating a target (300) to be identified by using a light source (200) with constant light intensity and simultaneously capturing images of the target (300) by using a camera (100) to generate a plurality of image frames ($P_N$) at different photographing angles ($\theta_i$), wherein an angle difference ($\Delta\theta_i$) between photographing angles ($\theta_i$, $\theta_{i-1}$) of two consecutive image frames ($P_i$, $P_{i-1}$) is less than a predetermined value ($\theta_T$), and the light source (200) and the camera (100) maintain a fixed relative position relation at the different photographing angles ($\theta_i$);
   registering the plurality of image frames ($P_i$) through homography transformation, wherein the registering the plurality of image frames ($P_N$) comprises:

   registering a current frame ($P_i$) of image in the plurality of image frames ($P_N$) to an adjacent previous frame ($P_{i-1}$) of image that serves as a reference image; or
   taking one frame of image in the plurality of image frames ($P_N$) as a reference image and registering the remaining image frames in the plurality of image frames ($P_N$) to the reference image, and calculating a differential angle image ($\Delta Pi$) of a current frame ($P_i$) of image relative to the reference image after registration, wherein the differential angle image ($\Delta Pi$) is a difference between the registered image frame ($P_i'$) and the reference image and represents a scattering difference of irradiation light on a surface texture of the target (300) to be identified at different photographing angles ($\theta_i$); and
   processing a plurality of differential angle images ($\Delta Pi$) generated based on the plurality of image frames ($P_N$) to generate a unique identification code (SN) indicating the target (300) to be identified,

   wherein processing the plurality of differential angle images ($\Delta Pi$) to generate an identification code (SN) indicating the target (300) to be identified comprises:

   summing the plurality of differential angle images ($\Delta Pi$) to generate a total differential angle image ($S_{DAI}$) representing the target (300) to be identified at different photographing angles ($\theta_i$); and
   processing the total differential angle image ($S_{DAI}$) by using a trained target identification model to output the identification code (SN), wherein the trained target identification model is obtained through training by using a sample collected from a target to be identified, in maintaining said fixed relative position relation of the light source (200) and the camera (100) at different photographing angles.

2. Target identification method of Claim 1, wherein the light source (200) is integrated with the camera (100) on the same electronic device.

3. Method of Claim 1 or 2, further comprising:

   selecting the same reference object on the plurality of image frames ($P_i$) and extracting a feature representation of the reference object; and
   processing the feature representation to generate a transformation matrix for the homography transformation.

4. Method of Claim 1, wherein the summing the plurality of differential angle images ($\Delta Pi$) comprises:

   assigning a weight ($\gamma_i$) to each differential angle image ($\Delta Pi$) based on a photographing angle difference ($\Delta\theta_i$) corresponding to the differential angle image ($\Delta P_i$); and
   summing the plurality of weighted differential angle images ($\gamma_i\Delta P_i$) to calculate the total differential angle image ($S_{DAI}$).

5. Method of Claim 1, wherein the target identification model is a trained neural network model.

6. Electronic device, having an image sensor (100) and a light source (200) for providing auxiliary light for photographing integrated thereon, the electronic device further comprising a target identification module for executing the method of any one of Claims 1 to 5.

**Patentansprüche**

1.  Verfahren zur Objektidentifizierung, das Folgendes umfasst:

    Bestrahlen eines zu identifizierenden Objekts (300) unter Verwendung einer Lichtquelle (200) mit konstanter Lichtintensität und gleichzeitiges Aufnehmen von Bildern des Objekts (300) unter Verwendung einer Kamera (100), um eine Mehrzahl von Einzelbildern ($P_N$) bei unterschiedlichen Aufnahmewinkeln($\Delta\theta_i$) zu erzeugen, wobei eine Winkeldifferenz ($\theta_i$) zwischen Aufnahmewinkeln ($\theta_i$, $\theta_{i-1}$) zweier aufeinanderfolgender Einzelbilder ($P_i$, $P_{i-1}$) kleiner als ein vorbestimmter Wert ($\theta_T$) ist und die Lichtquelle (200) und die Kamera (100) eine feste relative Positionsbeziehung bei den verschiedenen Aufnahmewinkeln ($\theta_i$) beibehalten;
    Registrieren der Mehrzahl von Einzelbildern ($P_i$) durch Homographietransformation, wobei das Registrieren der Mehrzahl von Einzelbildern ($P_N$) Folgendes umfasst:

    Registrieren eines aktuellen Einzelbilds ($P_i$) in der Mehrzahl von Einzelbildern ($P_N$) zu einem angrenzenden vorherigen Einzelbild ($P_{i-1}$), das als ein Referenzbild dient; oder
    Nehmen eines Einzelbilds in der Mehrzahl von Einzelbildern ($P_N$) als ein Referenzbild und Registrieren der verbleibenden Einzelbilder in der Mehrzahl von Einzelbildern ($P_N$) zu dem Referenzbild und Berechnen eines Differenzwinkelbilds ($\Delta Pi$) eines aktuellen Einzelbilds ($P_i$) relativ zu dem Referenzbild nach der Registrierung, wobei das Differenzwinkelbild ($\Delta Pi$) eine Differenz zwischen dem registrierten Einzelbild ($P_i'$) und dem Referenzbild ist und eine Streudifferenz von Bestrahlungslicht auf einer Oberflächentextur des Objekts (300) repräsentiert, die bei verschiedenen Aufnahmewinkeln ($\theta_i$) zu identifizieren ist; und
    Verarbeiten einer Mehrzahl von Differenzwinkelbildern ($\Delta P_i$), die basierend auf der Mehrzahl von Einzelbildern ($P_N$) erzeugt werden, um einen eindeutigen Identifikationscode (SN) zu erzeugen, der das zu identifizierende Objekt (300) angibt,
    wobei das Verarbeiten der Mehrzahl von Differenzwinkelbildern ($\Delta Pi$) zum Erzeugen eines Identifikationscodes (SN), der das zu identifizierende Objekt (300) angibt, Folgendes umfasst:

    Summieren der Mehrzahl von Differenzwinkelbildern ($\Delta P_i$), um ein Gesamtdifferenzwinkelbild ($S_{DAI}$) zu erzeugen, das das zu identifizierende Objekt (300) bei verschiedenen Aufnahmewinkeln ($\theta_i$) darstellt; und
    Verarbeiten des Gesamtdifferenzwinkelbildes ($S_{DAI}$) unter Verwendung eines trainierten Modells zur Objektidentifizierung zum Ausgeben des Identifikationscodes (SN), wobei das trainierte Modell zur Objektidentifizierung durch Training unter Verwendung einer Probe erhalten wird, die von einem zu identifizierenden Objekt gesammelt wurde, unter Beibehaltung der festen relativen Positionsbeziehung der Lichtquelle (200) und der Kamera (100) bei unterschiedlichen Aufnahmewinkeln.

2.  Verfahren zur Objektidentifizierung nach Anspruch 1, wobei die Lichtquelle (200) mit der Kamera (100) auf derselben elektronischen Vorrichtung integriert ist.

3.  Verfahren nach Anspruch 1 oder 2, das ferner Folgendes umfasst:

    Auswählen desselben Referenzobjekts auf der Mehrzahl von Einzelbildern ($P_i$) und Extrahieren einer Merkmalsdarstellung des Referenzobjekts; und
    Verarbeiten der Merkmalsdarstellung, um eine Transformationsmatrix für die Homographietransformation zu erzeugen.

4.  Verfahren nach Anspruch 1, wobei das Summieren der Mehrzahl von Differenzwinkelbildern ($\Delta Pi$) Folgendes umfasst:

    Zuweisen einer Gewichtung ($\gamma_i$) zu jedem Differenzwinkelbild ($\Delta Pi$) basierend auf einer Aufnahmewinkeldifferenz ($\Delta\theta_i$), die dem Differenzwinkelbild ($\Delta P_i$) entspricht; und
    Summieren der Mehrzahl von gewichteten Differenzwinkelbildern ($\gamma_i\Delta P_i$), um das Gesamtdifferenzwinkelbild ($S_{DAI}$) zu berechnen.

5.  Verfahren nach Anspruch 1, wobei das Modell zur Objektidentifizierung ein trainiertes neuronales Netzwerkmodell ist.

6.  Elektronische Vorrichtung, auf der ein Bildsensor (100) und eine Lichtquelle (200) zum Bereitstellen von Hilfslicht für das Fotografieren integriert sind, wobei die elektronische Vorrichtung ferner ein Modul zur Objektidentifizierung zum Ausführen des Verfahrens nach einem der Ansprüche 1 bis 5 umfasst.

**Revendications**

1. Procédé d'identification de cible, comprenant :

l'irradiation d'une cible (300) à identifier au moyen d'une source de lumière (200) avec une intensité lumineuse constante et la capture simultanée d'images de la cible (300) au moyen d'une caméra (100) pour générer une pluralité de trames d'image ($P_N$) à différents angles de prise de vues ($\theta_i$), une différence d'angle ($\Delta\theta_i$) entre les angles de prise de vues ($\theta_i$, $\theta_{i-1}$) de deux trames d'image consécutives ($P_i$, $P_{i-1}$) étant inférieure à une valeur prédéterminée ($\theta_T$), et la source de lumière (200) et la caméra (100) maintenant une relation de position relative fixe aux différents angles de prise de vues ($\theta_i$) ;
l'alignement de la pluralité de trames d'image ($P_i$) par transformation homographique, l'alignement de la pluralité de trames d'image ($P_N$) comprenant :

l'alignement d'une trame courante ($P_i$) d'image dans la pluralité de trames d'image ($P_N$) sur une trame adjacente précédente ($P_{i-1}$) d'image servant d'image de référence ; ou
la sélection d'une trame d'image dans la pluralité de trames d'image ($P_N$) comme image de référence et l'alignement des trames d'image restantes dans la pluralité de trames d'image ($P_N$) sur l'image de référence, et le calcul d'une image angulaire différentielle ($\Delta Pi$) d'une trame courante ($P_i$) d'image par rapport à l'image de référence après alignement, l'image angulaire différentielle ($\Delta Pi$) étant une différence entre la trame d'image alignée ($P_i'$) et l'image de référence et représentant une différence de diffusion de lumière d'irradiation sur une texture de surface de la cible (300) à identifier à différents angles de prise de vues ($\theta_i$) ; et le traitement d'une pluralité d'images angulaires différentielles ($\Delta P_i$) générées sur la base de la pluralité de trames d'image ($P_N$) pour générer un code d'identification unique (SN) indiquant la cible (300) à identifier,
dans lequel le traitement de la pluralité d'images angulaires différentielles ($\Delta Pi$) pour générer un code d'identification (SN) indiquant la cible (300) à identifier comprend :

la sommation de la pluralité d'images angulaires différentielles ($\Delta Pi$) pour générer une image angulaire différentielle totale ($S_{DAI}$) représentant la cible (300) à identifier à différents angles de prise de vues ($\theta_i$) ; et
le traitement de l'image angulaire différentielle totale ($S_{DAI}$) au moyen d'un modèle d'identification de cible entraîné pour délivrer le code d'identification (SN), le modèle d'identification de cible entraîné étant obtenu par entraînement au moyen d'un échantillon collecté à partir d'une cible à identifier, en maintenant ladite relation de position relative fixe de la source de lumière (200) et de la caméra (100) à différents angles de prise de vues.

2. Procédé d'identification de cible selon la revendication 1, dans lequel la source de lumière (200) est intégrée avec la caméra (100) sur le même dispositif électronique.

3. Procédé selon la revendication 1 ou 2, comprenant en outre :

la sélection du même objet de référence sur la pluralité de trames d'image ($P_i$) et l'extraction d'une représentation caractéristique de l'objet de référence ; et
le traitement de la représentation caractéristique pour générer une matrice de transformation pour la transformation homographique.

4. Procédé selon la revendication 1, dans lequel la sommation de la pluralité d'images angulaires différentielles ($\Delta Pi$) comprend :

l'attribution d'un poids ($\gamma_i$) à chaque image angulaire différentielle ($\Delta Pi$) sur la base d'une différence d'angle de prise de vues ($\Delta\theta_i$) correspondant à l'image angulaire différentielle ($\Delta Pi$) ; et
la sommation de la pluralité d'images angulaires différentielles pondérées ($\gamma_i\Delta P_i$) pour calculer l'image angulaire différentielle totale ($S_{DAI}$).

5. Procédé selon la revendication 1, dans lequel le modèle d'identification de cible est un modèle de réseau neuronal entraîné.

6. Dispositif électronique sur lequel sont intégrés un capteur d'images (100) et une source de lumière (200) utilisée pour fournir de la lumière auxiliaire pour des prises de vues, le dispositif électronique comprenant en outre un module d'identification de cible utilisé pour effectuer le procédé de l'une quelconque des revendications 1 à 5.

*Fig. 1*

```
┌─────────────────┐
│                 │
│      201        │
│                 │
└─────────────────┘
         │
┌─────────────────┐
│                 │
│      202        │
│                 │
└─────────────────┘
         │
┌─────────────────┐
│                 │
│      203        │
│                 │
└─────────────────┘
         │
┌─────────────────┐
│                 │
│      204        │
│                 │
└─────────────────┘
         │
┌─────────────────┐
│                 │
│      205        │
│                 │
└─────────────────┘
```

*Fig. 2*

Fig. 3

*Fig. 4*

**EP 3 955 160 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019286902 A